# EUROPEAN PATENT APPLICATION

(11) **EP 4 375 715 A1**
(43) Date of publication of application: **29.05.2024**
(21) Application number: 23212836.3
(22) Date of filing: 28.11.2023
(51) Int. Cl.: G01T 1/20

(54) **SENSOR TIP AND METHOD OF MANUFACTURING THE SAME**

(30) Priority: 28.11.2022 EP 22210048
(71) Applicant: Vrije Universiteit Brussel, 1050 Brussel (BE)
(72) Inventor: VAN ERPS, Jürgen, 3080 Tervuren (BE); GIEREJ, Agnieszka, 1040 Brussel (BE); BAGHDASARYAN, Tigran, 1090 Jette (BE); ROCHLITZ, Kurt, 1653 Dworp (BE)
(74) Representative: Winger

(57) **Abstract**

A sensor tip (2) for being coupled to an end of an optical fiber (3), wherein the sensor tip (2) comprises: a thermoplastic resin, and a scintillator material dispersed throughout substantially the entire sensor tip (2).

## Description

### Technical field of the invention

The present invention relates to the field of optical probes.

### Background of the invention

There is a need for obtaining real-time in vivo dose imaging and source localization when using optical fiber based probes for diagnostics-driven therapy through enhanced adaptive brachytherapy. In brachytherapy, a brachytherapy source, i.e., a radiation source, such as a radioactive material comprising ¹⁹²Ir, ¹²⁵I, or ¹⁰³Pd, is located in a patient next to the area requiring treatment, typically where a tumour is located. Due to the often high intensity of radiation doses near the brachytherapy source, misplacement of the brachytherapy source may, apart from an inefficient therapy, result in damage to the patient. The in vivo dose imaging and source localization may provide a real-time verification for the applied brachytherapy, allowing for direct adaptation of the brachytherapy by, for example, translocating the brachytherapy source, e.g., closer to the area requiring treatment.

Low dose rate (LDR) probes and high dose rate (HDR) probes for the in vivo dose imaging and source localization have been developed and are known in the state of the art. Such optical probes may comprise an optical fiber and a scintillator material in, or optically coupled to, the optical fiber. The scintillator material may be excited by the radiation from the brachytherapy source, and, in response, emits light into the optical fiber. This emitted light is typically transmitted by the optical fiber to a photon detector.

JP 2019 028034 describes a radiation detection device including a fluorescence substance for receiving radiation and emitting light to an optical fiber. JP2019039879 describes a neutron detector with a fluorescent body and an optical fiber for transmitting light from the fluorescent body to a photomultiplier tube. Jang et al. describe in Nuclear Instruments & Methods in Physics Research, Section A, 652 (2011), 928-931 a radiation sensor comprising a scintillator, an optical fiber bundle and a light measuring device to detect tritium in real-time. Ding et al. describe in EJNMMI Physics 7-60 (2022), 1-23 an inorganic scintillator-based fiber dosimeter.

A drawback of optical probes of the state of the art is that the optical efficiency of the optical probes is typically relatively low. Furthermore, mass manufacturing of the optical probes is, often, rather difficult. To enable for a general usage of adaptive brachytherapy, however, mass manufacturing is strongly preferred.

There is thus still a need in the art for devices and methods that address at least some of the above problems.

### Summary of the invention

It is an object of the present invention to provide a good sensor tip. It is a further object of the present invention to provide a good optical probe comprising the sensor tip.

It is an object of the present invention to provide a good method for forming a sensor tip. It is a further object of the present invention to provide a good method for forming an optical probe comprising the sensor tip.

It is an object of the present invention to provide a good setup for forming a sensor tip.

The above objective is accomplished by a method and apparatus according to the present invention.

It is an advantage of embodiments of the present invention that mass-manufacturing of an optical probe may be enabled. It is an advantage of embodiments of the present invention that, at the same time, the optical probe may have a good sensitivity.

It is an advantage of embodiments of the present invention that the optical probe may be highly suitable for adaptive brachytherapy, wherein the optical probe detects, using the sensor tip, the location of a brachytherapy source and, thereby, allows for verifying whether said brachytherapy source is correctly located in a patient.

In a first aspect, the present invention relates to a sensor tip for being coupled to an end of an optical fiber. The sensor tip comprises, e.g., is substantially formed of, a thermoplastic resin and a scintillator material. The scintillator material is dispersed throughout substantially the entire sensor tip. The scintillator material may be dispersed substantially uniform across the component to be attached to the fiber.

It is an advantage of embodiments of the present invention that, owing to the use of a thermoplastic resin, the present invention may allow for forming sensor tips having a cost-effective mass manufacturability, e.g., using moulding such as compression moulding. At the same time, the sensor tip may have a high sensitivity when used in an optical probe. This may be due to the scintillator material not being confined to a particular location, e.g., a core region, of the sensor tip, or in a coating on the sensor tip, but is present throughout substantially the entire sensor tip, which is in some embodiments a result of the moulding technique used. As a result, also radiation from the brachytherapy source incident on any location of the sensor tip may result in the generation of photons by the sensor tip. It is also an advantage that the scintillator material is dispersed throughout substantially the entire sensor tip and not only applied as a coating on top of the sensor tip. It is an advantage that the system is made scalable and repeatable..

In optimizing the shape of the sensor tip, the inventors have found that a cylindrical shape of the sensor tip may provide the best results with respect to sensitivity and robustness. However, when moulding the sensor tip, it may be difficult to, subsequently, remove the cylindrically shaped sensor tip from the mould. In embodiments, a first area of a first intersection between the sensor tip and a plane perpendicular to a direction from a first end to a second end of the sensor tip at the first end of the sensor tip, is larger than a second area of a second intersection between the sensor tip and a plane perpendicular to said direction at the second end of the sensor tip. In embodiments, the sensor tip comprises a first surface at the first end having a size equal to the first area and a second surface at the second end, opposite to the first surface, having a size equal to the second area. This may be true when the first and second surface are flat surfaces. The first surface may be parallel to the second surface. In embodiments, the first area is at least 5% larger, e.g., at least 10% larger, such as at least 20% lager, than the second area. In embodiments, a third area of a third intersection between the sensor tip and a plane perpendicular to said direction between, e.g., halfway between, the first end and the second end, is smaller than the first area and larger than the second area. It is an advantage of these embodiments that the sensor tip may have a cost-effective mass manufacturability. In particular, these embodiments facilitate moulding of the sensor tip, as the formed sensor tip may be easily removed from the mould, e.g., when the first end is located, e.g., exposed, at the open top of the mould and the second end is located at a bottom of the mould.

In embodiments, an angle between the direction from the first end to the second end and a direction parallel to a side wall of the sensor tip is in a range from 0.5° to 15°, such as for example in a range from 0.5° to 5°. It is an advantage of these embodiments that tapered side walls may result in easy removal of the sensor tip from the mould in which it was formed.

In embodiments, a distance from the first end to the second end is in a range from 100 µm to 5 mm, such as in a range from 250 µm to 3 mm. In embodiments, a width of the first surface is in a range from 50 µm to 5 mm, such as in a range from 200 µm to 2 mm. Preferably, the width of the first intersection is smaller than the distance from the first end to the second end.

In some embodiments, the thickness of the sensor tip through which the scintillation material is dispersed may in all directions be at least 0.3mm, e.g. at least 0.5mm, e.g. at least 0.7mm e.g. at least 0.9mm.

In embodiments, the sensor tip substantially has a shape of at least part of a cone. In preferred embodiments, the at least part of the cone is a truncated cone. In embodiments, a radius of a base, e.g., the first end, i.e., the first surface, of the truncated cone is in a range from 5% to 50% larger than a radius of a top surface, e.g., the second end, i.e., the second surface, of the truncated cone. The inventors have found that sensor tips having the shape of at least part of a cone may have a high sensing efficiency when used in an optical probe.

In embodiments, the scintillator material comprises an inorganic crystalline material doped with cerium, terbium or europium, preferably terbium or europium. It is an advantage of these embodiments that these materials have a particularly large scintillation efficiency for low dose rate (terbium) and high dose rate applications (europium). For example, the scintillator material may comprise at least one of Gd₂O₂S:Tb, YVO₄:Eu, Y₂O₃:Eu, Ce:Lu₂SiO₅, or Ce:Lu₂₍₁₋ₓ₎Y₂ₓSiO₅. In embodiments, the scintillator material has a mean particle size in a range from 1 to 100 µm, preferably in a range from 2 to 50 µm, more preferably in a range from 5 to 15 µm.

In embodiments, the thermoplastic resin comprises at least one of polystyrene, polycarbonate, a cyclic olefin (co)polymer, and poly(methyl methacrylate). Preferably, the thermoplastic resin comprises poly(methyl methacrylate). Poly(methyl methacrylate) may facilitate the moulding and has a very good optical transparency in the visible range (i.e., from 380 to 750 nm).

The scintillator material being dispersed throughout substantially the entire sensor tip is a typical result of the moulding process that may be used for forming the sensor tip of the present invention. It is an advantage of embodiments of the present invention that scintillation may occur throughout substantially the entire sensor tip, which may result in a high sensitivity of the sensor tip. Said scintillator material being dispersed may mean that sensor tip comprises the scintillator material in a matrix formed by the thermoplastic resin. Said scintillator material being dispersed may mean that the sensor tip comprises a continuous phase formed of the thermoplastic resin, which binds the dispersed scintillator material that forms separate regions of scintillator material within the sensor tip. However, for example, when high concentrations of the scintillator material are present, the scintillator material may form a substantially continuous phase as well.

In embodiments, the scintillator material being dispersed throughout substantially the entire sensor tip may mean that a core region of the sensor tip, along a central axis from the first end to the second end of the sensor tip and within a distance of 1/4^{th} of the width from the central axis, perpendicular to the second axis, of the sensor tip, comprises a first part of the scintillator material, and an outer region, along the central axis and at a distance of from 1/4^{th} of the width from the central axis to the sides of the sensor tip, comprises a second part of the scintillator material. In other words, the core region is the part of the sensor tip from the central axis to halfway between the central axis and the sides of the sensor tip, and the outer region is the region from halfway between the central axis and the sides of the sensor tip, to the sides of the sensor tip, i.e., the part of the sensor tip excluding the core region. In embodiments, a ratio of a first concentration, in mass per volume, of the scintillator material in the core region to a second concentration, in mass per volume, of the scintillator material in the outer region, is in a range from 0.2 to 5.0, preferably in a range from 0.5 to 2.0, more preferably in a range from 0.9 to 1.1, e.g., substantially the same.

In embodiments, scintillator material being dispersed throughout substantially the entire sensor tip may mean that the first axis lies in a first plane separating a first half of the sensor tip from a second half of the sensor tip, wherein a ratio of a first concentration, in mass per volume, of the scintillator material in the first half to a second concentration, in mass per volume, of the scintillator material in the second half, is in a range from 0.2 to 5.0, preferably in a range from 0.5 to 2.0, more preferably in a range from 0.9 to 1.1, e.g., substantially the same.

In preferred embodiments, a concentration of the scintillator material, in mass per volume, is substantially constant throughout the sensor tip. In embodiments, the scintillator material is dispersed substantially uniformly, e.g., is substantially uniformly mixed with the thermoplastic resin, throughout substantially the entire sensor tip. A uniform distribution may result in a robust sensor tip having good, uniform, scintillation properties.

In embodiments, the sensor tip comprises from 1 to 80 wt-%, such as from 5 to 75 wt-%, for example, from 20 to 70 wt-%, of the scintillator material. In embodiments, the sensor tip comprises from 10 to 99 wt-%, such as from 20 to 80 wt-%, for example, from 30 to 60 wt-%, of the thermoplastic resin. In embodiments, the sensor tip consists of from 10 to 70 wt-% of the scintillator material, from 20 to 80 wt-% of the thermoplastic resin, and up to 20 wt-%, preferably up to 5 wt-%, more preferably up to 1 wt-%, optional further materials, different from the scintillator material and the thermoplastic resin. The optional further materials may comprise contaminants, or may be intentionally added. It is an advantage of embodiments of the present invention that the sensor tip may comprise a large concentration of the scintillator material.

Any features of any embodiment of the first aspect may be independently as correspondingly described for any embodiment of any of the other aspects of the present invention.

In a second aspect, the present invention relates to an optical probe comprising an optical fiber, and a sensor tip in accordance with embodiments of the first aspect of the present invention. Herein, the sensor tip is coupled, e.g., optically coupled, to an end of the optical fiber.

In embodiments, a first area of a first intersection between the sensor tip and a plane perpendicular to a direction from a first end to a second end of the sensor tip at the first end of the sensor tip, is larger than a second area of a second intersection between the sensor tip and a plane perpendicular to said direction at the second end of the sensor tip. In these embodiments, the optical fiber is, preferably, coupled to the first end of the sensor tip. In embodiments wherein the sensor tip has the shape of a truncated cone, a base, e.g., a first surface, of the truncated cone may face the optical fiber. It is an advantage of these embodiments that a good optical coupling and highly efficient sensing may be achieved for the optical probe. In particular, in these embodiments, the transfer of light, generated by scintillation, from the sensor tip into the optical fiber may be particularly good.

In embodiments, the optical probe comprises a layer formed of a radiation-cured, e.g., UV-cured, adhesive between the sensor tip and the optical fiber. Said adhesive may provide the optical and physical connection between the sensor tip and the optical fiber.

In embodiments, the optical fiber is a polymer optical fiber. In embodiments, the optical fiber is formed of a thermoplastic resin, which is preferably the same thermoplastic resin as that comprised in the sensor tip. It is an advantage of these embodiments that an optical coupling between the sensor tip and the optical fiber may be good.

In embodiments, the optical fiber is optically coupled, at a different end, different from the end of the optical fiber to which the sensor tip is coupled, to a sensor for detecting photons generated by the scintillation, i.e., a photon detector.

Any features of any embodiment of the second aspect may be independently as correspondingly described for any embodiment of any of the other aspects of the present invention.

In a third aspect, the present invention relates to a method for forming a sensor tip comprising: obtaining a mixture comprising a scintillator material and a thermoplastic resin; and moulding the mixture so as to form the sensor tip. It is an advantage that moulding facilitates the formation of sensor tips at a high manufacturing rate. Furthermore, the uniformity between different sensor tips may be good.

In embodiments, said moulding of the mixture comprises: moulding said mixture so as to form a disc, and transfer moulding so as to form the sensor tip from said disc. This two-step moulding process may facilitate the formation of robust and uniform sensor tips. The two-step moulding process may be enabled by the use of the property of thermoplastic resins to reversibly soften to a liquid when heated or to becomes less glassy and more viscous and rubber-like, and to harden to a solid when cooled. The latter allows the material to take the shape of the mould.

In embodiment, the scintillator material in the obtained mixture is present as particles. In embodiments, the scintillator material has a mean particle size in a range from 1 to 100 um, preferably in a range from 2 to 50 um, more preferably in a range from 5 to 15 um. The inventors have obtained particularly good results for sensor tips obtained from compression moulding when the mean particle size is from 5 to 15 um. Herein, an optimization may be sought between, on the one hand, good scintillation efficiencies that may be associated with larger particles, and, on the other hand, good compression moulding properties, and good uniformity of the formed sensor tip, which may be associated with smaller particles sizes. The particle size of the scintillator material may not be substantially influenced by the moulding of the mixture to form the disc, and/or the transfer moulding of the disc to form the sensor tips.

In embodiments, the thermoplastic resin in the obtained mixture is present as particles. In embodiments, the thermoplastic resin in the obtained mixture has a mean particle size in a range from 0.1 to 10 mm, preferably in a range from 0.3 to 3 mm.

It is an advantage of embodiments of the present invention that only small variations on the length of the sensor are likely to occur. Furthermore, it is an advantage of embodiments of the present invention that automisation can be obtained, that the methods result in a high accuracy and that the manufacturing is time efficient.

Overall a very manual, inaccurate, time consuming way to make those sensor tips on POF> No information is give

Any features of any embodiment of the third aspect may be independently as correspondingly described for any embodiment of any of the other aspects of the present invention.

In a fourth aspect, the present invention relates to a method for forming an optical probe, comprising: forming a sensor tip using the method in accordance with embodiments of the third aspect of the present invention, and coupling, e.g., optically coupling, the sensor tip to an end of an optical fiber.

In embodiments, said coupling comprises applying a radiation curable resin, preferably a UV curable resin, to a surface of the sensor tip, e.g., the first end of the sensor tip, or to the end of the optical fiber, contacting the radiation curable resin on said surface with the end of the optical fiber, and exposing the radiation curable resin to radiation so as to cure said radiation curable resin. It is an advantage of these embodiments that a robust mechanical coupling between the optical fiber and the sensor tip may be obtained. It is an advantage of these embodiments that a good optical coupling between the optical fiber and the sensor tip may be obtained.

Instead of the UV curable resin, any adhesive could be used. Still alternatively, said coupling may, for example, be achieved by melting the end of the optical fiber or the surface of the sensor tip, and directly contacting the end of the optical fiber with the surface of the sensor tip. After the molten end or surface solidifies, a good coupling may be obtained.

Any features of any embodiment of the fourth aspect may be independently as correspondingly described for any embodiment of any of the other aspects of the present invention.

In a fifth aspect, the present invention relates to a setup for forming a sensor tip, comprising at least one mould adapted for receiving a mixture, wherein the setup is configured for moulding said sensor tip in the at least one mould. The setup of the present invention may allow for forming a sensor tip at a high manufacturing rate. The at least one mould typically defines a shape in which the sensor tip is to be formed. In embodiments, a top opening of the mould, through which the sensor tip, after its formation, is to be removed from the mould, has an area that is larger than a bottom area of the mould. This may facilitate removing of the sensor tip from the mould.

In embodiments, the setup comprises means for applying a vacuum to the mould. This may prevent the environment from affecting the quality of the sensor tips.

In embodiments, the setup comprises indicator for indicating the location of the sensor tips in the mould. This may be advantageous as the size of the sensor tips may be small.

Any features of any embodiment of the fifth aspect may be independently as correspondingly described for any embodiment of any of the other aspects of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic representation of a perspective view of an optical probe in accordance with embodiments of the present invention.
FIG. 2 is a schematic representation of a perspective view of a sensor tip in accordance with embodiments of the present invention.
FIG. 3 is a schematic representation of a perspective view of a sensor tip in accordance with embodiments of the present invention.
FIG. 4A, FIG. 4B and FIG. 4C are schematic representations of side views of different sensor tips in accordance with embodiments of the present invention.
FIG. 5 is a flow diagram for a method in accordance with embodiments of the present invention.
FIG. 6 is a schematic vertical cross-section of a setup for forming a sensor tip in accordance with embodiments of the present invention.
FIG. 7 is a schematic representation of a perspective view of part of the setup for forming a sensor tip in accordance with embodiments of the present invention.
FIG. 8 is an optical microscopy image of an optical probe in accordance with embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a sensor tip for being coupled to an end of an optical fiber. The sensor tip comprises, e.g., is substantially formed of, a thermoplastic resin and a scintillator material. The scintillator material is dispersed throughout substantially the entire sensor tip.

In a second aspect, the present invention relates to an optical probe comprising an optical fiber, and a sensor tip in accordance with embodiments of the first aspect of the present invention. Herein, the sensor tip is coupled, e.g., optically and/or physically coupled, to an end of the optical fiber.

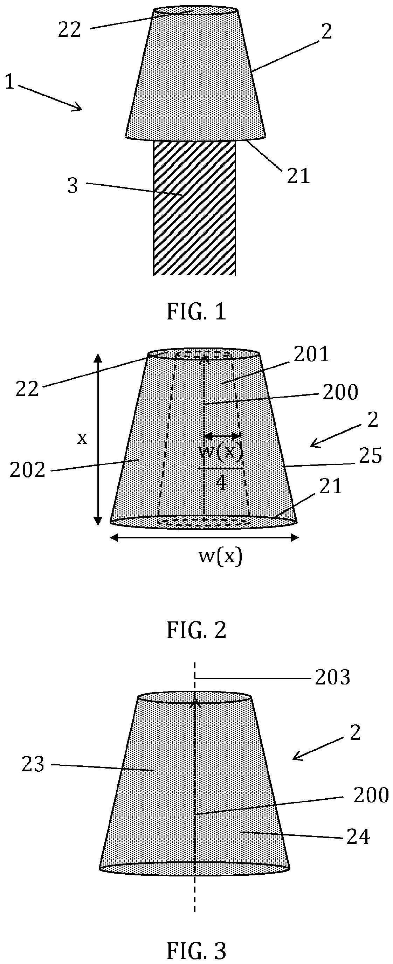

Reference is made to FIG. 1. In this example, an optical probe 1 comprises a sensor tip 2 and an optical fiber 3. The sensor tip 2 has the shape of a truncated cone, comprising a base at a first end 21 of the sensor tip 2 and a top surface at a second end 22 of the sensor tip 2, opposite to the first end 21. Herein, the base has a larger radius than the top surface. In this example, the first end 21 is coupled to the optical fiber 3, i.e., the first end 21 faces the optical fiber 3.

Reference is made to FIG. 2. The sensor tip 2 comprises a thermoplastic resin and a scintillator material. The scintillator material is dispersed throughout substantially the entire sensor tip. For example, the sensor tip 2 may be divided in a core region 201 and an outer region 202. In this example, the core region 201 is defined along a central axis 200 from the first end 21 to the second end 22 of the sensor tip 2, and contains the part of the sensor tip 2 that is within a distance of 1/4^{th} of the width w(x) of the sensor tip 2 from the central axis 200. In other words, the core region 201 is the part of the sensor tip 2 between the central axis 200 and halfway between the central axis 200 and the sides 25 of the sensor tip 2. Herein, the central axis 200 runs from a center of the first end 21 to a center of the second end 22. Furthermore, in this example, an outer region 202 is defined along the central axis 200 and at a distance of from 1/4^{th} of the width w(x) from the central axis 200 to 1/2^{nd} of the width w(x), i.e., in this example, to the sides 25, of the sensor tip 2. As such, the outer region 202 may be defined as the part of the sensor tip 2 outside of the core region 201. Herein said width w(x) is measured perpendicular to the central axis 200. In this example, the width w(x) is dependent on the location x along the central axis 200. Thus, 1/4^{th} of the width w(x) may depend on the location x as well. As such, in this example, the core region 201 forms a truncated cone with a radius that is half that of the sensor tip 2. In this example, both the core region 201 and the outer region 202 each contain part of the scintillator material.

Reference is made to FIG. 3. The sensor tip 2 may be separated in a first half 23 and a second half 24, wherein the first half 23 and the second half 24 are separated by a first plane 203 comprising the first axis 200. In FIG. 3, said first plane is perpendicular to the plane of the paper and is indicated by the dashed line 203. In this example, both the first half 23 and the second half 24 each contain part of the scintillator material.

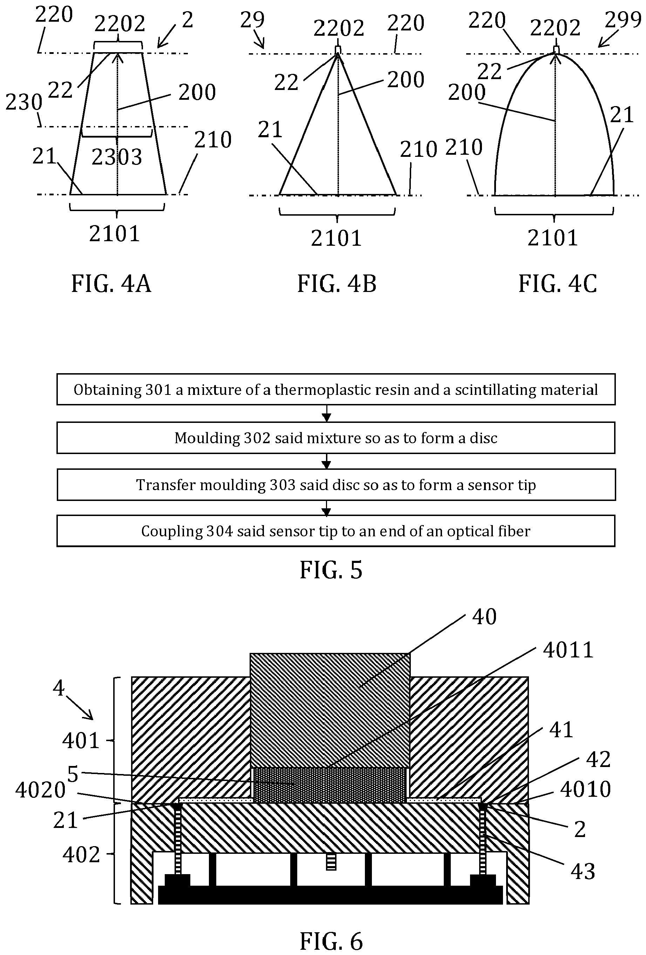

Reference is made to FIG. 4A, which is a schematic side view of the truncated conical sensor tip 2 of FIG. 1-3. A first plane 210, perpendicular to a direction (indicated by the dotted line 200) from the first end 21 to the second end 22 of the sensor tip 2, intersects the sensor tip 2 at the first end 21 of the sensor tip 2, defining a first intersection 2101. A second plane 220, perpendicular to a direction (indicated by the dotted line 200) from the first end 21 to the second end 22 of the sensor tip 2, intersects the sensor tip 2 at the second end 22 of the sensor tip 2, defining a second intersection 2202. In this example, the first intersection 2101 is larger, e.g., by area, than the second intersection 2202. Furthermore, a third plane 230, perpendicular to said direction 200, intersects the sensor tip 2 at a location intermediate, e.g., halfway, between the first and 21 and the second end 22, thereby defining a third intersection 2303. Said third intersection has a size, e.g., area, that is between that of the first intersection 2101 and the second intersection 2202.

Reference is made to FIG. 4B and 4C, which are schematic side views of a conical sensor tip 29 and a hemispherical sensor tip 299 in accordance with embodiments of the present invention. Also for these examples, a first plane 210, perpendicular to a direction (indicated by the dotted line 200) from the first end 21 to the second end 22 of the sensor tip 2, intersects the sensor tip 2 at the first end 21 of the sensor tip 2, defining a first intersection 2101. A second plane 220, perpendicular to a direction (indicated by the dotted line 200) from the first end 21 to the second end 22 of the sensor tip 2, intersects the sensor tip 2 at the second end 22 of the sensor tip 2, defining a second intersection 2202. The size, e.g., area, of said second intersection 2202 is, in these two examples, negligible. In this example, the first intersection 2101 is larger than the second intersection 2202.

In a third aspect, the present invention relates to a method for forming a sensor tip comprising: obtaining a mixture comprising a scintillator material and a thermoplastic resin; and moulding the mixture so as to form the sensor tip.

In a fourth aspect, the present invention relates to a method for forming an optical probe, comprising: forming a sensor tip using the method in accordance with embodiments of the third aspect of the present invention, and coupling, e.g., optically coupling, the sensor tip to an end of an optical fiber.

In a fifth aspect, the present invention relates to a setup for forming a sensor tip, comprising at least one mould adapted for receiving a mixture, wherein the setup is configured for moulding said sensor tip in the at least one mould.

Reference is made to FIG. 5, which is a block diagram of a preferred method in accordance with embodiments of the present invention. Firstly, a mixture is obtained 301, wherein the mixture comprises a thermoplastic resin, typically particles of the thermoplastic resin, and a scintillator material, typically particles, e.g., crystalline particles, of the scintillator material. As one example, an inorganic scintillator material (Gd₂O₂S:Tb for LDR and 4YVO₄:Eu+1Y₂O₃:Eu for HDR) was mixed with a thermoplastic resin (PMMA) suitable for mass replication, such that the mixture consisted of 60wt-% scintillator material and 40wt-% PMMA. The inventors found that this mixture yields a robust sensor tip with a high sensitivity towards radiation. The inventors have further found that PMMA powder from Sigma Aldrich having a molar mass (Mw) ~15,000 Da and a particle size distribution ranging from 0.149 mm to 2.0 mm, yields particularly good results.

The thus obtained mixture may be moulded so as to form a disc. Herein, the mixture may be heated. For example, the mixture may be heated to a temperature above the glass transition temperature and below the melting point of the thermoplastic resin, or above the melting point of the thermoplastic resin. However, said heating may not be essential, and instead, a pressure may be applied, wherein the moulding 302 is performed solely by application of the pressure.

Reference is made, in parallel, to FIG. 6, which is a schematic representation of a vertical cross-section of a setup 4 for forming sensor tips 2 in accordance with embodiments of the present invention. After forming the disc 5, the sensor tips 2 may be formed from said disc 5 by a transfer moulding step 303. The setup 4 comprises a top part 401 and a bottom part 402. During transfer moulding, the top part 401 is fixedly mounted on the bottom part 402. The top part 401 defines a cavity 4011, at the bottom of which the disc 5 may be located. Part of the material of the disc 5 may be transferred, via injection gates 41, into moulds 42, which have a shape adapted for forming the sensor tips 2. Said transfer may be induced by applying a pressure to the disc 5, for example by pressing means 40. Said pressing means 40 are preferably adapted for hermetically sealing the cavity comprising the disc 5 from an environment. The pressing means 40 is moveable through the cavity 4011.

The moulds 42 may define a truncated conical shape so that the sensor tips 2 formed in the moulds 42 may have said truncated conical shape. Preferably, a base of the truncated cone forming the sensor tip 2, faces the side of the mould 42 from which the sensor tip 2 is to be removed, e.g., the injection gates, which is at the side where the mixture is injected. This may facilitate removal of the sensor tip 2 from the mould 42 after formation of said sensor tip 2.

In this example, the top surface 4020 of the bottom part 402 of the setup 4 coincides with a top of the moulds 42. A bottom surface 4010 of the top part 401 that rests on said top surface 4020 of the bottom part 402, may also coincide with the top of the moulds 42. Thereby, after formation of the sensor tips 2 in the moulds 42, by shoving the top part 401 of the setup 4 over the bottom part 42 of the setup 4, the sensor tips 2 may be decoupled, e.g., released, from the part of the mixture present in the injection gates 41. Thereby, an end, e.g., the first end, e.g., the base 21, of the truncated conical sensor tip 2, coinciding with the top of the moulds 42, may be exposed.

Preferably, a vacuum is applied to the injection gates 41 and the moulds 42. It is an advantage of transfer moulding that application of said vacuum is straightforward. Said vacuum may result in substantially no environmental impact on, e.g., contamination being present in, the sensor tip 2 that is formed.

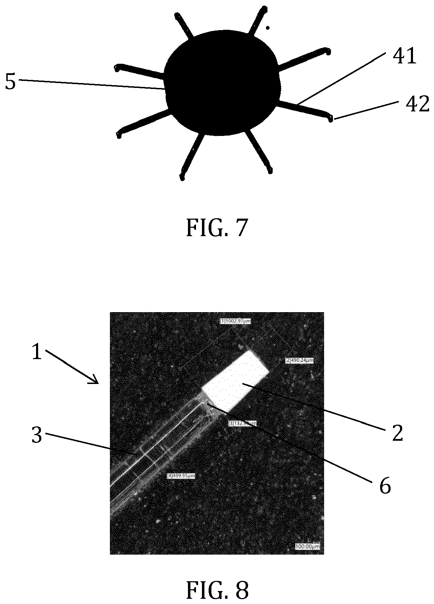

Reference is made to FIG. 7, which is a schematic perspective view of the disc 5, from which material is transferred, via injection gates 41, into the moulds 42. As may be observed, the exemplary setup comprises eight moulds 42, each fluidically connected to the disc 5 by a dedicated injection gate 41. However, many more moulds 42 may be connected to the same disc 5, which may advantageously result in a faster manufacturing of the sensor tips 2. From experiments, the inventors have found that the step of transfer moulding takes about 15 minutes.

After formation and exposure of the sensor tip 2, a polymer optical fiber may be coupled 304 (cfr. FIG. 5) to the sensor tip 2. This may be performed when the sensor tip 2 is still confined in the mould 42. The coupling may, instead, be performed after removal of the sensor tip 2 from the mould 42. Preferably, the bottom part 402 of the setup 4 comprises indicators for indicating the location of the moulds 42, and thus, the sensor tips 2, in the bottom part 402.

For example, the fiber end to which the sensor tip 2 is coupled may be dipped in a radiation, e.g., UV, curable adhesive: said radiation curable adhesive coated fiber end may then, in this example, contact the end, e.g., the base 21, of the truncated conical sensor tip. After said contacting, radiation may be applied to the curable adhesive so as to cure the resin and establish a rigid bond between the sensor tip 2 and the polymer optical fiber. As one example, NOA 1665 was used as a UV curable adhesive. NOA1665 has a high refractive index (n=1.665), which provides a high radiation output when compared to for example NOA65, which could alternatively be used but which has a low refractive index (n=1.52). Preferably, a refractive index of the radiation curable adhesive, after curing of the adhesive, is at least 1.55, more preferably at least 1.60, at 20°C and 587.56 nm. Preferably, the layer of the radiation curable adhesive is evenly spread on the fiber end or the surface of the larger base of the tip. Preferably, the adhesive layer between the optical fiber and the sensor tip does not exceed a thickness (in a direction from the optical fiber to the sensor tip) of 500 µm.

In this example, the bottom part 402 of the setup 4 further comprises release pins 43, which, in a retracted state, is retracted from the mould 42, and which may, in a releasing state, be moved so as to extend through a bottom surface of the mould 42, into the mould 42. The release pins 43 may be moved upwards so as to push the sensor tips 2 from their respective moulds 42.

Reference is made to FIG. 8. After coupling the sensor tip 2 to the polymer optical fiber 3, an optical probe 1 may be obtained. A layer of radiation cured adhesive 6 may be observed between the sensor tip 2 and the polymer optical fiber 3.

It is to be understood that although preferred embodiments, specific constructions and configurations, as well as materials, have been discussed herein for devices according to the present invention, various changes or modifications in form and detail may be made without departing from the scope of this invention. Functionality may be added or deleted from the block diagrams and operations may be interchanged among functional blocks. Steps may be added or deleted to methods described within the scope of the present invention.

## Claims

1. A sensor tip (2, 29, 299) for being coupled to an end of an optical fiber (3), wherein the sensor tip (2, 29, 299) comprises:
a thermoplastic resin, and
a scintillator material dispersed throughout substantially the entire sensor tip (2, 29, 299).

2. The sensor tip (2, 29, 299) according to claim 1, wherein a first area of a first intersection (2101) between the sensor tip (2, 29, 299) and a first plane (210) perpendicular to a direction (200) from a first end (21) to a second end (22) of the sensor tip (2, 29, 299), at the first end (21) of the sensor tip (2, 29, 299), is larger than a second area of a second intersection (2202) between the sensor tip (2, 29, 299) and a second plane (220) perpendicular to said direction (200), at the second end (22) of the sensor tip (2).

3. The sensor tip (2, 29, 299) according to claim 2, wherein the sensor tip (2, 29, 299) substantially has a shape of at least part of a cone.

4. The sensor tip (2, 29, 299) according to claim 3, wherein the sensor tip (2, 29, 299) substantially has a shape of at least part of a truncated cone.

5. The sensor tip (2, 29, 299) according to claim 4, wherein a radius of a base (21) of the truncated cone is from 5% to 50% larger than a radius of a top surface (22) of the truncated cone.

6. The sensor tip (2, 29, 299) according to any of the previous claims, wherein the scintillator material comprises an inorganic crystalline material doped with cerium, terbium or europium, preferably terbium or europium.

7. The sensor tip (2, 29, 299) according to any of the previous claims, wherein the thermoplastic resin is a poly(methyl methacrylate).

8. The sensor tip (2, 29, 299) according to any of the previous claims, wherein the scintillator material is dispersed substantially uniformly throughout substantially the entire sensor tip (2, 29, 299).

9. An optical probe (1) comprising:
an optical fiber (3), and
a sensor tip (2, 29, 299) according to any of the previous claims, coupled to an end of the optical fiber (3).

10. The optical probe (1) according to claim 9 as dependent on claim 4, wherein a base (21) of the truncated cone faces the optical fiber (3).

11. A method for forming a sensor tip (2, 29, 299) comprising:
obtaining (301) a mixture comprising a scintillator material and a thermoplastic resin,
moulding the mixture so as to form the sensor tip (2, 29, 299).

12. The method according to claim 11, wherein moulding the mixture comprises:
moulding (302) said mixture so as to form a disc (5), and
transfer moulding (303) so as to form the sensor tip (2, 29, 299) from said disc (5).

13. A method for forming an optical probe (1), comprising:
- forming a sensor tip (2, 29, 299) using the method in accordance with claim 11 or 12, and
- coupling (304) the sensor tip (2, 29, 299) to an end of an optical fiber (3).

14. The method according to claim 13, wherein said coupling comprises:
- applying a radiation curable resin (6), preferably a UV curable resin, to a surface (21) of the sensor tip (2, 29, 299) or the end of the optical fiber, contacting the radiation curable resin (6) on said surface with the end of the optical fiber or the sensor tip, respectively, and
- exposing the radiation curable resin (6) to radiation so as to cure said radiation curable resin (6).

15. A setup (4) for forming a sensor tip (2, 29, 299), comprising at least one mould (42) adapted for receiving a mixture,
wherein the setup (4) is configured for moulding said sensor tip (2, 29, 299) in the at least one mould (42).
